# FASCICULE DE BREVET EUROPEEN

(11) **EP 0 495 733 B1**
(45) Date de publication et mention de la délivrance du brevet: **28.02.1996**
(21) Numéro de dépôt: 92420014.0
(22) Date de dépôt: 10.01.1992
(51) Int. Cl.: C08L 25/04, C08K 13/02

(54) **Compositions thermoplastiques chargées au moyen d'agents dispersants et leurs applications**
Gefüllte thermoplastische Mischungen mit einem Dispersionsmittel und ihre Anwendungen
Filled thermoplastic compositions with a dispersion agent and their applications

(30) Priorité: 16.01.1991 FR 9100646
(43) Date de publication de la demande: 22.07.1992
(73) Titulaire: COATEX S.A., F-69300 Caluire (FR)
(72) Inventeur: Blanchard, Pierre, F-1600 Reyrieux (FR); Egraz, Jean-Bernard, F-69130 Ecully (FR); Ravet, Georges, F-69290 Saint-Genis-Les-Ollieres (FR)

(56) Documents cités:
- EP-A- 0 031 300
- EP-A- 0 303 207
- EP-A- 0 413 085

## Description

La présente invention concerne de nouvelles compositions thermoplastiques hautement chargées, fluides et homogènes, obtenues par l'introduction de charges minérales pulvérulentes dans des résines thermoplastiques telles que les polystyrènes et leurs dérivés, au moyen d'un agent dispersant.

Pour diminuer le prix de revient des produits obtenus à partir des compositions thermoplastiques, l'homme du métier a toujours cherché à introduire des quantités croissantes de charge dans les résines thermoplastiques. Mais l'un des inconvénients majeurs, qui apparaît lors de la mise en oeuvre en quantité élevée de matière minérale, se manifeste dans l'hétérogénéité du méloange formé par la charge minérale et le polymère, tel que le polystyrène ou ses dérivés.

Cette hétérogénéité du mélange est préjudiciable à son utilisation ultérieure, car elle est à l'origine de la chute des caractéristiques mécaniques des matières plastiques obtenues.

Ainsi, afin d'amoindrir cette perte des propriétés mécaniques des matières plastiques chargées, divers agents de couplage ont déjà été utilisés dans des compositions thermoplastiques.

Ainsi, on peut citer la demande de brevet DE 2 735 160 qui propose des compositions contenant un promoteur d'adhésion organo-phosphoré, possédant comme radicaux des groupes alkyle, alkylène, arylalkyle, ou aralkényle.

Un autre brevet EP 100 066 indique également l'utilisation de phosphates organiques comme surfactants dans une composition thermoplastique.

L'utilisation dans des compositions à base de polystyrène ou de copolymères du polystyrène de tous ces agents de types connus a conduit expérimentalement à des mélanges de poudres hétérogènes ou d'agrégats hétérogènes dont l'efficacité reste médiocre.

D'autre part, le brevet FR 2 582 310 revendique un agrégat thermoplastique contenant un agent fluidifiant de type organo-phosphoré ayant pour radicaux des groupes alkyle ou aryle éthoxylés. L'inconvénient de cette technique est que l'agrégat contenant cet agent fluidifiant doit être redispersé dans la matière polymère.

Un autre inconvénient qui apparaît lors de la mise en oeuvre de cette technique selon l'art antérieur est une chute des propriétés thermiques et mécaniques de la matière plastique chargée obtenue.

Par conséquent, un des buts de l'invention est de fournir des compositions thermoplastiques fortement chargées, fluides et homogènes, conduisant à des matières plastiques dont les propriétés mécaniques et thermiques sont améliorées. Un de ces buts est notamment d'améliorer l'aspect des objets obtenus à partir de ces compositions hautement chargées et d'en diminuer le prix de revient.

Ainsi un des buts de l'invention est de fournir une nouvelle composition thermoplastique contenant un agent dispersant, des charges minérales pulvérulentes dans les résines thermoplastiques telles que les polystyrènes et leurs dérivés comme les styrène-butadiènes, les acrylonitrile-butadiène-styrènes, les styrène-acrylonitriles, les styrène-butadiène-styrènes.

Un autre but de l'invention est de fournir une nouvelle composition thermoplastique contenant un agent dispersant qui peut être nouveau et qui permet d'améliorer la compatibilité entre la charge minérale pulvérulente et le thermoplastique.

Enfin, un autre but de l'invention est de fournir une nouvelle composition thermoplastique hautement chargée, fluide et homogène grâce à la présence d'un agent dispersant adapté.

Alors que l'art antérieur propose des compositions thermoplastiques contenant des dispersants de type organo-phosphoré avec des groupes alkyle, aryle, alkylaryle ou arylalkyle, éthoxylés ou non, la composition thermoplastique chargée selon l'invention s'en distingue par le fait qu'elle comprend essentiellement :
(a) une résine thermoplastique, choisie parmi le polystyrène et ses dérivés,
(b) une charge minérale pulvérulente,
(c) un agent dispersant de formule générale (I) : 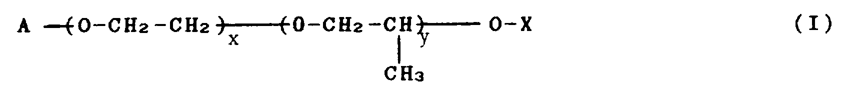 dans laquelle :
   - A est un groupe polyaryle, ramifié ou non,
   - x et y sont des entiers allant de 0 à 100 inclus, tels que x + y représente un entier allant de 1 à 100 inclus,
   - X = H ou 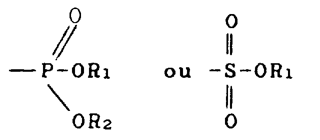 avec : 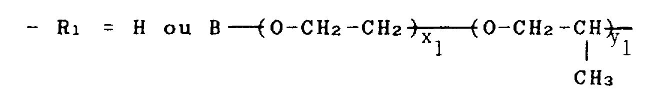 dans lequel :
   - B est un groupe polyaryle, ramifié ou non, ou un radical alkyle, aryle, arylalkyle, alkylaryle, alcanoyle ou amine,
   - x₁ et y₁ sont des entiers allant de 0 à 100 inclus, tels que x₁ + y₁ représente un entier allant de 1 à 100 inclus, 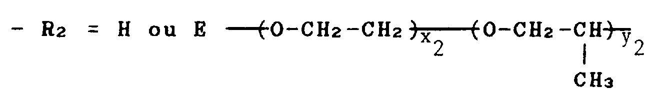 dans lequel :
   - E est un groupe polyaryle, ramifié ou non, ou un radical alkyle, aryle, arylalkyle, alkylaryle, alcanoyle ou amine,
   - x₂ et y₂ sont des entiers allant de 0 à 100 inclus, tels que x₂ + y₂ représente un entier allant de 1 à 100 inclus,
   - et où R₁ et R₂ peuvent être semblables ou différents,
(d) éventuellement un ou plusieurs autre(s) additif(s) de type(s) connu(s).

Parmi les agents dispersants utilisés selon l'invention (c), certains sont nouveaux et correspondent à la formule générale (I) dans laquelle :
- A est un groupe polyaryle, ramifié ou non,
- x et y sont des nombres entiers ne dépassant pas 100, tels que x + y soit un nombre entier supérieur à 40 et ne dépassant pas 100.

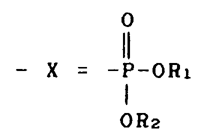

De préférence, l'agent dispersant répond à la formule générale (I) dans laquelle :
- A est un groupe polyaryle, ramifié ou non, de poids moléculaire compris entre 154 et 2 000, tel que par exemple un radical choisi parmi les di(phényl-1 éthyl) phénols communément appelés les distyrylphénols, les tri(phényl-1 éthyl) phénols communément appelés les tristyrylphénols, les oligomères du polystyrène ou les oligomères de copolymère du styrène avec un autre monomère, et/ou
- B et E, lorsqu'ils ne sont pas des groupes polyaryles, sont des radicaux alkyle, aryle, alkylaryle, arylalkyle, alcanoyle ou amine possédant 1 à 18 atomes de carbone, comme par exemple les radicaux lauryle, stéaryle, nonylphénol et autres.

La résine thermoplastique (a) peut être choisie, par exemple, parmi les polymères du styrène-butadiène, d'acrylonitrile-butadiène-styrène, du styrène-acrylonitrile, du styrène-butadiène-styrène et est plus particulièrement du polystyrène.

La charge minérale pulvérulente (b) peut être choisie par exemple parmi les sels et/ou oxydes minéraux contenant au moins un élément métallique, tels que par exemple les carbonates alcalino-terreux, comme le carbonate de calcium, le carbonate de magnésium, le carbonate de zinc, la dolomite, la chaux, la magnésie, les sulfates de baryum, de calcium, les hydroxydes d'aluminium, la silice, les argiles et autres silico-alumineux tels que le kaolin, le mica, les oxydes métalliques tels que par exemple l'oxyde de zinc, les oxydes de fer, l'oxyde de titane, la wollastonite ; on utilise toutefois plus particulièrement le carbonate de calcium comme charge pulvérulente.

Les additifs éventuels (d) de types connus sont choisis, par exemple, parmi les stabilisants thermiques ou photochimiques, les antioxydants, les lubrifiants, les plastifiants, les antistatiques, les ignifugeants, les fibres, les billes de verre.

La composition thermoplastique selon l'invention comprend plus particulièrement :
(a) la résine thermoplastique,
(b) 5 à 85% en poids de charge minérale pulvérulente, par rapport au poids total de la charge et de la résine,
(c) 0,5 à 5% en poids, par rapport au poids de la charge, d'un agent dispersant de formule générale (I), et
(d) d'autres additifs de types connus.

La composition thermoplastique ou compound selon l'invention est caractérisée par la mesure de l'indice de fluidité (MFI), réalisée au moyen de l'appareil commercialisé par la société ZWICK de type 4105.

Cet indice est défini, selon la norme ASTM 1238, comme étant la quantité exprimée en grammes pour 10 minutes, de polymère et/ou copolymère qui s'écoule à une température choisie dans l'intervalle limité par les températures de ramollissement et de transformation sous une charge donnée normalisée (5 kg dans le cas présent) au travers d'une filière de diamètre déterminé (2,09 à 2,10 millimètres) pendant un temps mesuré.

L'agent dispersant est caractérisé par son indice d'acide, déterminé au moyen d'une méthode titrimétrique selon la norme NF T30-402, et par son spectre infra-rouge réalisé au moyen du spectrophotomètre infra-rouge IR 398 avec station de données 3600 DATA, commercialisé par la société PERKIN ELMER.

L'amélioration, par rapport aux compositions de l'art antérieur, des compositions thermoplastiques selon l'invention qui sont fluides et homogènes et peuvent contenir jusqu'à 85% de charges grâce à la présence d'un agent dispersant possédant au moins un radical polyaryle et un nombre d'oxyalkylène compris entre 1 et 100, se traduit par une diminution de leur viscosité, donc une augmentation de l'indice de fluidité MFI.

La portée et l'intérêt de l'invention seront mieux perçus grâce à la description illustrative des exemples qui ne présentent aucun caractère limitatif.

### Exemple 1

### Préparation de la composition thermoplastique

Dans un mélangeur rapide d'une capacité de 4,5 litres, ayant une cuve chauffée électriquement et commercialisé par la société GUEDU, on a mélangé à la température de 220°C :
- 300 g de polystyrène, de MFI = 2,4 à 180°C, vendu par la société ATOCHEM sous le nom de LACQRENE référence 7240,
- 700 g de carbonate de calcium naturel de surface spécifique de 2 m g ⁻¹produit par la société OMYA sous le nom de MILLICARB,
- et 7 g d'agent dispersant à tester.

Les mélanges ont alors été soumis pendant 30 minutes à l'action mécanique de la pale du mélangeur correspondant à la position "D" du variateur de vitesse du mélangeur.

Pendant toute l'opération de mélange, la température du milieu a été maintenue à 220°C.

### Mesure de l'indice de fluidité des compositions

Lorsque le mélange obtenu était une pâte homogène et cohérente (qualité du mélange dite bonne), il a alors été effectué un calandrage de la pâte sous forme de plaques qui ont été découpées en petits cubes ayant une dimension de 2 à 3 millimètres de côté et dont on a mesuré à 300°C l'indice de fluidité MFI.

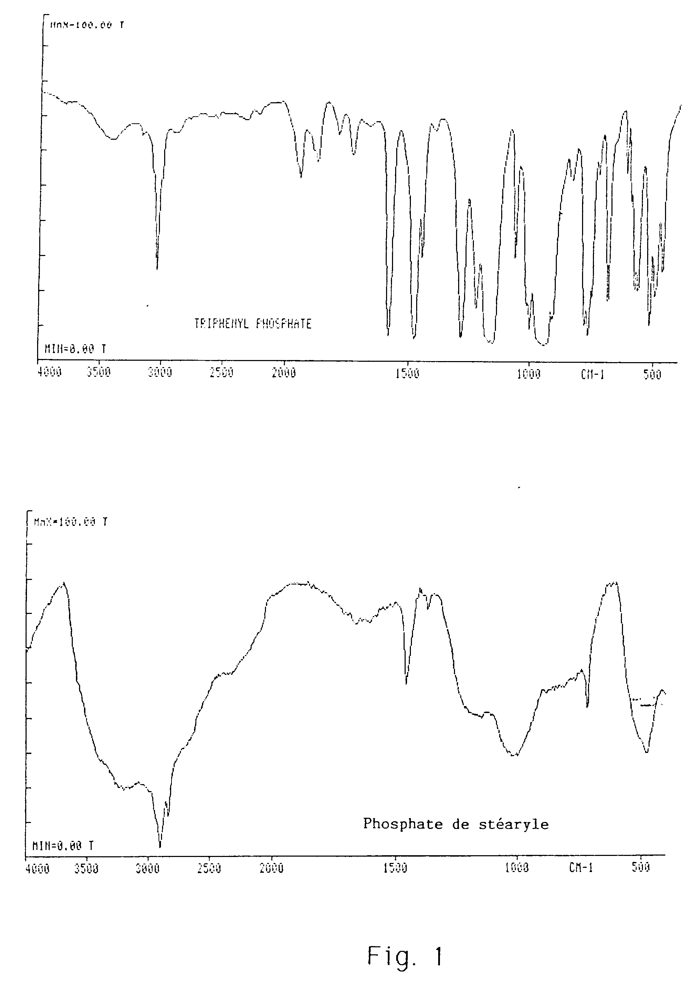

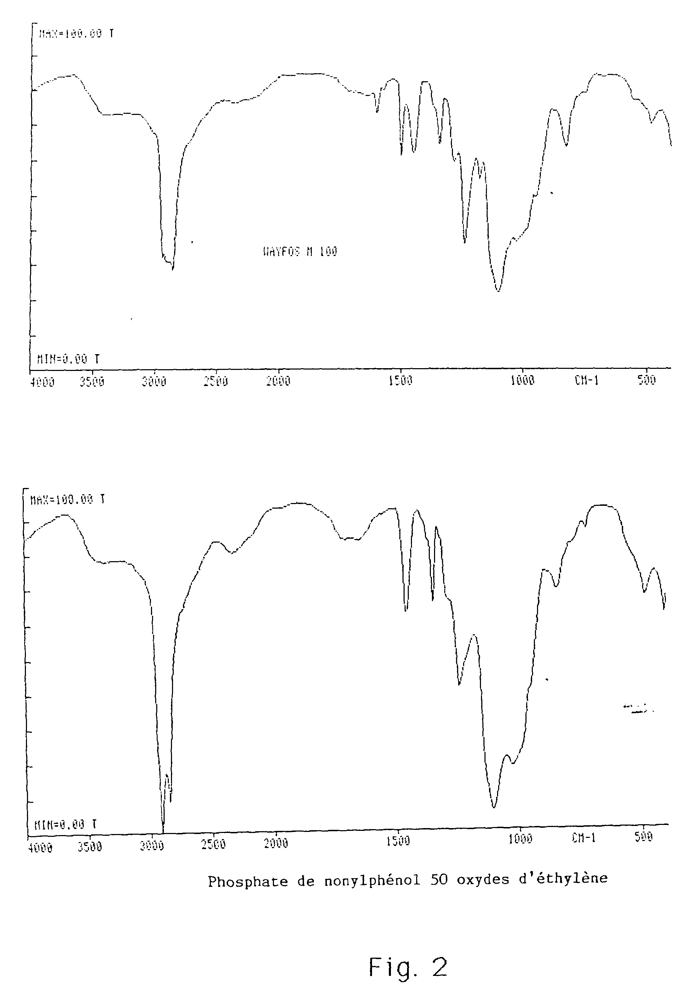

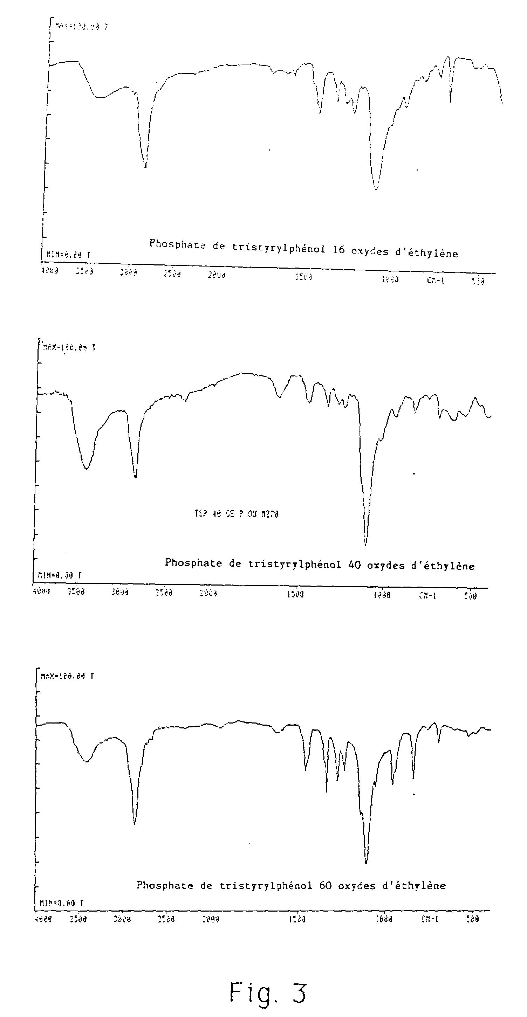

Avec ce mode opératoire il a été effectué huit mélanges : sans agent de dispersion (essai n°1) et avec sept agents de dispersion différents (essais n°2 à 8) qui sont :
- Essai n°2 :: Du phosphate de stéaryle de l'art antérieur d'indice d'acide I_{A} = 283 mg/g déterminé selon la norme NF T30-402 et dont le spectre infra-rouge est représenté par la figure 1 annexée.
- Essai n°3 :: Triphénylphosphate de l'art antérieur, vendu par la société ALDRICH sous la référence 10585-6 d'indice d'acide I_{A} = 0 mg/g déterminé selon la norme NF T30-402 et dont le spectre infra-rouge est représenté par la figure 1 annexée.
- Essai n°4 :: Phosphate de nonylphénol 10 oxydes d'éthylène commercialisé par la société PHILIP A. HUNT sous le nom de WAYFOS M 100 de l'art antérieur, d'indice d'acide I_{A} = 148 mg/g déterminé selon la norme NF T30-402 et dont le spectre infra-rouge est représenté par la figure 2 annexée.
- Essai n°5 :: Phosphate de nonyphénol 50 oxydes d'éthylène de l'art antérieur, d'indice d'acide I_{A} = 55 mg/g déterminé selon la norme NF T30-402 et dont le spectre infra-rouge est représenté par la figure 2 annexée.
- Essai n°6 :: Phosphate de tristyrylphénol 16 oxydes d'éthylène utilisé pour la composition selon l'invention, composé d'un mélange à 90% d'un monoester phosphorique et 10% d'un diester phosphorique de formule générale (I), dans laquelle:
. **pour le monoester :** 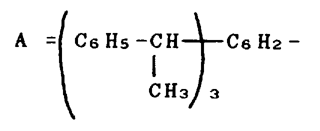 x = 16 y = 0 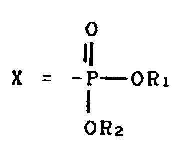 R₁ = R₂ = H
. **Pour le diester :** 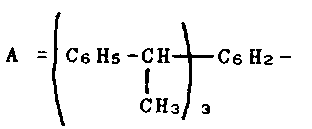 x = 16 y = 0 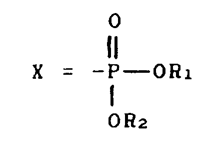 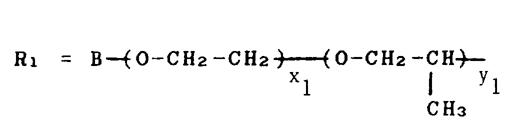
   avec x₁ = 16
   y₁ = 0
   B = A R₂ = H
   d'indice d'acide I_{A} = 60 mg/g déterminé selon la norme NF T30-402 et dont le spectre infra-rouge est représenté par la figure 3 annexée.
   Essai n°7 : Phosphate de tristyrylphénol 40 oxydes d'éthylène utilisé pour la composition selon l'invention, composé d'un monoester phosphorique de formule générale (I) dans laquelle : 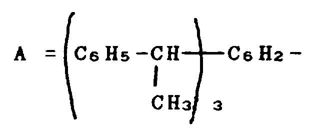 x = 40 y = 0 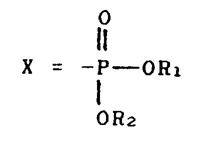 R₁ = R₂ = H
   d'indice d'acide I_{A} = 55 mg/g déterminé selon la norme NF T30-402 et dont le spectre infra-rouge est représenté par la figure 3 annexée.
- Essai n°8 :: Phosphate de tristyrylphénol 60 oxydes d'éthylène utilisé pour la composition selon l'invention, composé d'un monoester phosphorique de formule générale (I) dans laquelle : 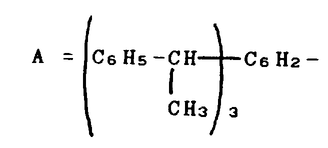
x = 60 y = 0 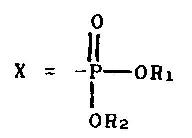 R₁ = R₂ = H
d'indice d'acide I_{A} = 40 mg/g déterminé selon la norme NF T30-402 et dont le spectre infra-rouge est représenté par la figure 3 annexée.

Les résultats sont rassemblés dans le tableau I qui suit :

**TABLEAU I**

| | ESSAI n° | Dispersants utilisés pour le mélange | Qualité de la dispersion obtenue | Valeur de l'indice de fluidité (MFI) |
|---|---|---|---|---|
| ART ANTERIEUR | 1 | Pas de dispersant | Mauvaise | Mesure impossible |
| | 2 | Phosphate de stéaryle | Mauvaise | Mesure impossible |
| | 3 | Triphenyl phosphate | Mauvaise | Mesure impossible |
| | 4 | Phosphate de nonylphénol 10 oxydes d'éthylène | Mauvaise | Mesure impossible |
| | 5 | Phosphate de nonylphénol 50 oxydes d'éthylène | Bonne | 0 |
| Selon l'invention | 6 | Phosphate de tristyrylphénol 16 oxydes d'éthylène | Bonne | 3,5 |
| | 7 | Phosphate de tristyrylphénol 40 oxydes d'éthylène | Bonne | 3 |
| | 8 | Phosphate de tristyrylphénol 60 oxydes d'éthylène | Bonne | 1,5 |

La qualité de la composition est dite mauvaise lorsque le mélange obtenu est hétérogène et formé d'agrégats de dimensions irrégulières.

La lecture du tableau I permet de constater que les compositions thermoplastiques de l'art antérieur sont, ou bien hétérogènes, ou bien très peu fluides.

En revanche, les compositions thermoplastiques selon l'invention, obtenues au moyen d'un agent dispersant de formule générale (I), c'est-à-dire un agent ayant au moins un groupe polyaryle et un nombre d'oxyde d'alkylène de 1 à 100 inclus, sont fluides, c'est-à-dire ont un certain MFI.

### Exemple 2

Avec le même mode opératoire que dans l'exemple 1 et les mêmes quantités des divers matériaux, on a effectué selon l'invention huit essais (essais 9 à 16) avec 8 agents afin d'apprécier la variation du MFI en fonction du nombre de moles d'oxyde d'alkylène présentes dans la formule de l'agent dispersant de la composition selon l'invention.

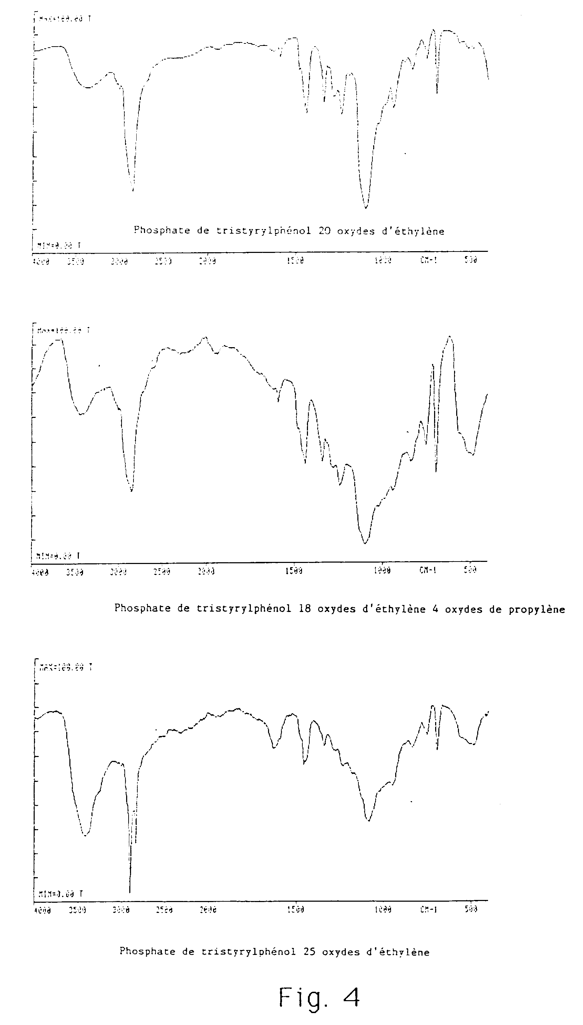

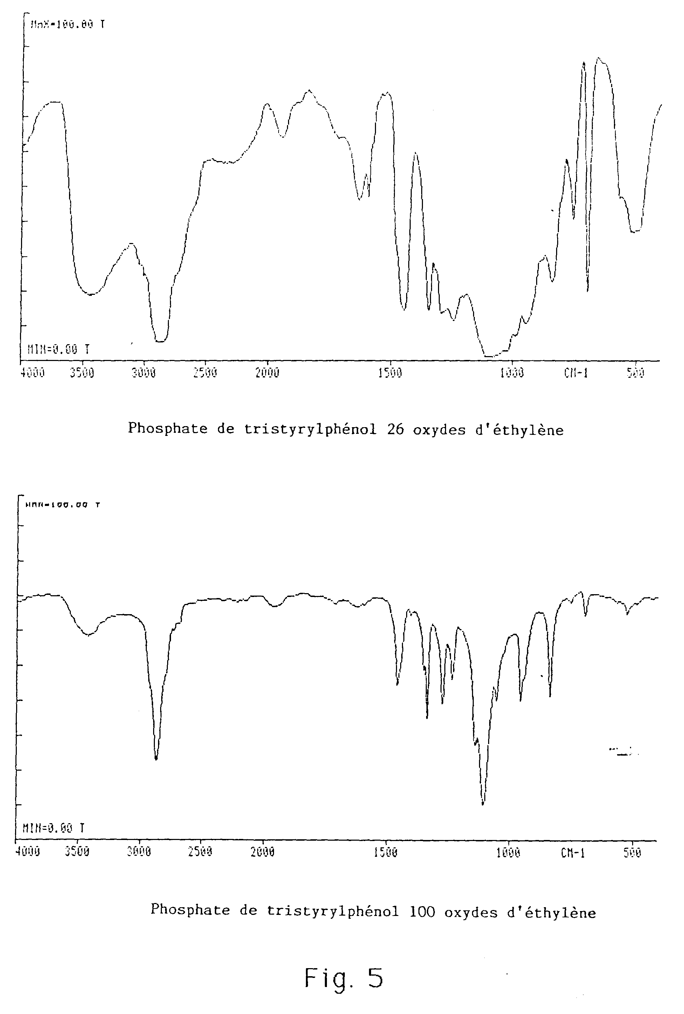

Les divers agents dispersants utilisés pour la composition selon l'invention sont tous des monoesters ou diesters de phosphates de tristyrylphénol avec un nombre distinct de moles d'oxyde d'alkylène soit :
- Essai n°9 :: Même agent que l'essai 6, soit 16 moles d'oxyde d'éthylène.
- Essai n°10 :: Monoester avec 20 moles d'oxyde d'éthylène, d'indice d'acide I_{A} = 27 mg/g déterminé selon la norme NF T30-402 et dont le spectre infra-rouge est représenté par la figure 4 annexée.
- Essai n°11 :: Mélange de 75% de monoester et 25% de diester avec 18 moles d'oxyde d'éthylène et 4 moles d'oxyde de propylène d'indice d'acide I_{A} = 37 mg/g déterminé selon la norme NF T 30-402 et dont le spectre infra-rouge est representé à la figure 4 annexée.
- Essai n°12 :: Monoester avec 25 moles d'oxyde d'éthylène, d'indice d'acide I_{A} = 72 mg/g déterminé selon la norme NF T 30-402 et dont le spectre infra-rouge est représenté par la figure 4 annexée.
- Essai n°13 :: Mélange à 84% de monoester et 16% de diester avec 26 moles d'oxyde d'éthylène, d'indice d'acide I_{A} = 33 mg/g déterminé selon la norme NF T 30-402 et dont le spectre infra-rouge est représenté par la figure 5 annexée.
- Essai n°14 :: Même agent que l'essai 7, soit avec 40 moles d'oxyde d'éthylène.
- Essai n°15 :: Même agent que l'essai 8, soit avec 60 moles d'oxyde d'éthylène.
- Essai n°16 :: Monoester avec 100 moles d'oxyde d'éthylène, d'indice d'acide I_{A} = 25 mg/g déterminé selon la norme NF T 30-402 et dont le spectre infra-rouge est représenté par la figure 5 annexée.

On a également mesuré l'indice de fluidité (MFI) de la composition obtenue avec le même mode opératoire que dans l'exemple 1.

Les résultats sont rassemblés dans le tableau II suivant :

**TABLEAU II**

| ESSAI n° | Dispersants utilisés pour le mélange | Qualité de la dispersion obtenue | Valeur de l'indice de fluidité (MFI) |
|---|---|---|---|
| 9 | Phosphate de nonylphénol 16 oxydes d'éthylène | Bonne | 3,5 |
| 10 | Phosphate de nonylphénol 20 oxydes d'éthylène | Bonne | 3,5 |
| 11 | Phosphate de nonylphénol 18 oxydes d'éthylène 4 oxydes de propyléne | Bonne | 3,5 |
| 12 | Phosphate de nonylphénol 25 oxydes d'éthylène | Bonne | 3,5 |
| 13 | Phosphate de nonylphénol 26 oxydes d'éthylène | Bonne | 3,5 |
| 14 | Phosphate de tristyrylphénol 40 oxydes d'éthylène | Bonne | 3 |
| 15 | Phosphate de tristyrylphénol 60 oxydes d'éthylène | Bonne | 1,5 |
| 16 | Phosphate de tristyrylphénol 100 oxydes d'éthylène | Bonne | 0,5 |

La lecture du Tableau II permet de constater que les meilleurs indices de fluidité, donc les compositions les plus fluides, sont obtenus lorsque l'agent dispersant contient un radical polyaryle et un nombre d'oxyde d'alkylène variant de 16 à 40.

### Exemple 3

Avec le même mode opératoire que dans l'exemple 1, on a effectué quatre essais (essais n°17 à 20) pour tester deux autres résines.

On a mélangé :
- Essai n°17 :: - 300 g de polystyrène de poids moléculaire 280 000 et de MFI = 4 à 200°C, vendu par la société ALDRICH sous la référence 18242-7,
- 700 g de carbonate de calcium naturel de surface spécifique de 2 mg⁻¹, produit par la société OMYA sous le nom de MILLICARB
- 7 g de phosphate de stéaryle, déjà utilisé dans l'essai 2.
- Essai n°18 :: - 600 g de résine styrène-butadiène de MFI 18,5 à 180°C, vendu par la société ALDRICH sous la référence 20054-9,
- 600 g de carbonate de calcium naturel de surface spécifique de 2 mg⁻¹, produit par la société OMYA sous le nom de MILLICARB,
- 6 g de phosphate de stéaryle, déjà utilisé dans l'essai 2.
- Essai n°19 :: les mêmes quantités des mêmes produits que dans l'essai 17 en remplaçant le phosphate de stéaryle par du phosphate de tristyrylphénol 16 oxydes d'éthylène, déjà utilisé dans l'essai 9.
- Essai n°20 :: les mêmes quantités des mêmes produits que dans l'essai 18 en remplaçant le phosphate de stéaryle 15 par du phosphate de tristyrylphénol 16 oxydes d'éthylène, déjà utilisé dans l'essai 9.

On a également mesuré l'indice de fluidité (MFI) des compositions obtenues avec le même mode opératoire que dans l'exemple 1. Les résultats sont rassemblés dans le tableau III qui suit.

**TABLEAU III**

| | ESSAI n° | Type de résine | Dispersants utilisés pour le mélange | Qualité de la dispersion obtenue | Valeur de l'indice de fluidité (MFI) |
|---|---|---|---|---|---|
| ART ANTERIEUR | 17 | Polystyrène 280 000g/mole | Phosphate de stéaryle | Mauvaise | Mesure impossible |
| | 18 | Copolymère styrène-butadiène | Phosphate de stéaryle | Mauvaise | Mesure impossible |
| Selon l'invention | 19 | Polystyrène 280 000g/mole | Phosphate de tristyrylphénol 16 oxydes d'éthylène | Bonne | 20 |
| | 20 | Copolymère styrène-butadiène | Phosphate de tristyrylphénol 16 oxydes d'éthylène | Bonne | Mesure impossible car réticulation du polymère à la température de mesure |

La lecture du tableau III permet de constater que les compositions thermoplastiques selon l'invention ont un aspect homogène et sont fluides, ce qui n'est pas le cas pour les compositions de l'art antérieur.

### Exemple 4

Avec le même mode opératoire que dans l'exemple 1, on a mélangé :
- 500 g de polystyrène de MFI = 2,4 à 180°C, vendu par la société ATOCHEM sous le nom de LACQRENE, référence 7240,
- 500 g de matière minérale pulvérulente à tester, à savoir :
   . l'hydroxyde d'aluminium dont 50% des particules sont inférieures à 2µm et la totalité inférieure à 50µm, commercialisée par la société MARTINSWERK sous la dénomination MARTINAL OL 104-C (essais n°21 et 22),
   . l'hydroxyde de titane commercialisé par la société THANN et MULHOUSE sous la dénomination ATl (essais n°23 et 24),
   . le sulfate de calcium hydraté, de granulométrie moyenne de 15µm, ou
   . 10 g du phosphate de tristyrylphénol avec 16 moles d'oxyde d'éthylène, déjà utilisé dans l'essai 9.

On a également mesuré l'indice de fluidité (MFI) des compositions obtenues, avec le même mode opératoire que dans l'exemple 1 mais à 200°C.

Les résultats sont rassemblés dans le tableau IV qui suit :

**TABLEAU IV**

| ESSAI n° | Type de charge | Type de dispersant | Qualité de la dispersion obtenue | Valeur de l'indice de fluidité (MFI) |
|---|---|---|---|---|
| 21 | Hydroxyde d'aluminium | Pas de dispersant | Bonne | 3 |
| 22 | Hydroxyde d'aluminium | Phosphate de tristyrylphénol 16 oxydes d'éthylène | Bonne | 4 |
| 23 | Oxyde de titane | Pas de dispersant | Mauvaise | Mesure impossible |
| 24 | Oxyde de titane | Phosphate de tristyrylphénol 16 oxydes d'éthylène | Bonne | 0 |
| 25 | Sulfate de calcium | Pas de dispersant | Bonne | 0 |
| 26 | Sulfate de calcium | Phosphate de tristyrylphénol 16 oxydes d'éthylène | Bonne | 2 |

La lecture du tableau IV permet de constater que l'agent dispersant de formule générale (I) permet d'obtenir des compositions thermoplastiques selon l'invention, fluides et chargées avec diverses matières minérales pulvérulentes telles que l'hydroxyde d'aluminium, l'oxyde de titane et le sulfate de calcium.

### Exemple 5

Avec le même mode opératoire que dans l'exemple 1, on a effectué trois essais (essais n°27 à 29) en augmentant le taux de charge dans la résine.

On a ajouté au polystyrène, de MFI = 2,4 à 180°C, vendu par la société ATOCHEM sous le nom de LACQRENE, référence 7240, des quantités croissantes de carbonate de calcium naturel produit par la société OMYA sous le nom de MILLICARB, ainsi que du phosphate de tristyrylphénol à 20 oxydes d'éthylène déjà utilisé dans l'essai 10. Puis on a mesuré l'indice de fluidité (MFI) de la composition obtenue avec le même mode opératoire que dans l'exemple 1. Les résultats sont rassemblés dans le tableau V qui suit :

**TABLEAU V**

| ESSAI n° | Quantité de polystyrène en grammes | Quantité de charge en grammes | Quantité de dispersant en grammes | Qualité de la dispersion | Valeur de l'indice de fluidité (MFI) |
|---|---|---|---|---|---|
| 27 | 300 | 700 | 7 | Bonne | 3,5 |
| 28 | 200 | 800 | 40 | Bonne | 1 |
| 29 | 150 | 850 | 42,5 | Bonne | 0 |

La lecture du tableau V permet de constater que l'agent dispersant de formule générale I permet d'obtenir des compositions thermoplastiques selon l'invention, fluides, homogènes, chargées jusqu'à 85% en poids de matière minérale pulvérulente, par rapport au poids total de la résine plus la charge, ce qui n'est pas le cas pour les compositions de l'art antérieur.

### Exemple 6

Dans les mêmes conditions opératoires et avec les mêmes quantités que dans l'exemple 1, on a utilisé un agent selon l'art antérieur (essai n°30) et deux autres agents dispersants de formule générale (I) pour effectuer les essais n°31 et 32. La mesure de l'indice de fluidité des compositions obtenues a été réalisée comme dans l'exemple 1 et figure dans le tableau VI qui suit :

**TABLEAU VI**

| | ESSAI n° | Dispersants utilisés pour le mélange | Qualité de la dispersion obtenue | Valeur de l'indice de fluidité (MFI) |
|---|---|---|---|---|
| ART ANTERIEUR | 30 | Phosphate de stéaryle | Mauvaise | Mesure impossible |
| Selon l'invention | 31 | Sulfate de tristyrylphénol 20 oxydes d'éthylène | Bonne | 3,5 |
| | 32 | Tristyrylphénol 20 oxydes d'éthylène | Bonne | 3,5 |

La lecture du tableau VI permet de constater qu'avec ces deux autres agents de formule générale (I), on obtient des compositions thermoplastiques, selon l'invention, homogènes et fluides.

### Exemple 7

Cet exemple a pour but d'estimer la fragilité ou la ténacité des matières plastiques obtenues à partir de compositions thermoplastiques chargées de l'art antérieur ou selon l'invention. On a alors effectué les essais n°33 et 34 pour déterminer la résistance au choc Charpy des plastiques selon la norme NF T51-035.

Ainsi, pour l'essai n°33 à partir d'une composition thermoplastique de l'art antérieur de MFI = 2,3 à 180°C et composée de :
- 657 g de polystyrène vendu par la société ATOCHEM sous le nom de LACQRENE référence 7240,
- 343 g de mélange maître à haute concentration en charge vendu sous le nom d'OMYALENE G200 par la société OMYA,
on a obtenu, par injection, des éprouvettes non entaillées de dimensions :

9,7 mm de largeur
60 mm de longueur
5 mm d'épaisseur

De même, pour l'essai n°34, à partir d'une composition thermoplastique selon l'invention, de MFI = 2,1 à 180°C et composée de :
- 700 g de polystyrène vendu par la société ATOCHEM sous le nom de LACQRENE référence 7240,
- 300 g de carbonate de calcium naturel de surface spécifique de 2 mg⁻¹ produit par la société OMYA sous le nom de MILLICARB,
- et 3 g de phosphate de tristyrylphénol 16 oxydes d'éthylène, on a obtenu, par injection, des éprouvettes non entaillées de dimensions :
   9,8 mm de largeur
   60 mm de longueur
   5,05 mm d'épaisseur

Sur ces éprouvettes, on a mesuré, selon la norme NF T51-035, la résistance au choc Charpy.

Les résultats obtenus figurent dans le tableau VII qui suit :

**TABLEAU VII**

| | Art Antérieur | Invention |
|---|---|---|
| Essai n° | 33 | 34 |
| Résistance kJ.m⁻ | 8,3 | 11,8 |

La lecture du tableau VII nous permet de constater que les éprouvettes obtenues à partir de la composition thermoplastique chargée, selon l'invention, a une plus grande résistance au choc Charpy que celles obtenues à partir de compositions thermoplastiques chargées de l'art antérieur.

## Revendications

1. Composition thermoplastique chargée, caractérisée en ce qu'elle comprend essentiellement :
a) une résine thermoplastique choisie parmi le polystyrène et ses dérivés,
b) une charge minérale pulvérulente,
c) un agent dispersant de formule (I) : 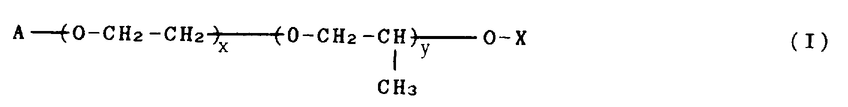 dans laquelle :
- A est un groupe polyaryle, ramifié ou non,
- x et y sont des entiers allant de 0 à 100 inclus, tels que x + y représente un entier allant de 1 à 100 inclus, 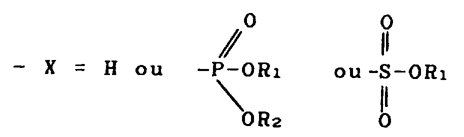 avec : 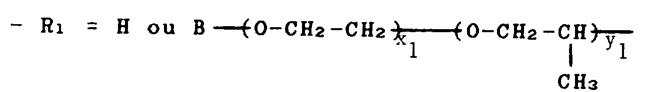 dans lequel :
- B est un groupe polyaryle, ramifié ou non, ou un radical alkyle, aryle, arylalkyle, alkylaryle, alcanoyle ou amine,
- x₁ et y₁ sont des entiers allant de 0 à 100 inclus, tels que x₁ + y₁ représente un entier allant de 1 à 100 inclus, 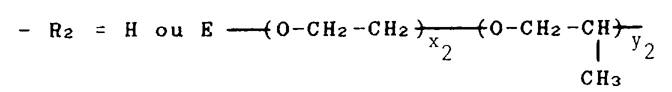 dans lequel :
- E est un groupe polyaryle, ramifié ou non, ou un radical alkyle, aryle, arylalkyle, alkylaryle, alcanoyle ou amine,
- x₂ et y₂ sont des entiers allant de 0 à 100 inclus, tels que x₂ + y₂ représente un entier allant de 1 à 100 inclus,
- et où R₁ et R₂ peuvent être semblables ou différents,
d) éventuellement, un ou plusieurs autres additifs de types connus, choisis de préférence parmi les stabilisants thermiques ou photochimiques, les antioxydants, les lubrifiants, les plastifiants, les antistatiques, les ignifugeants, les fibres de verre, les billes de verre.

2. Composition thermoplastique selon la revendication 1, caractérisée en ce que la résine thermoplastique est du type polystyrène, copolymère styrène-butadiène, copolymère acrylonitrile-butadiène-styrène, copolymère styrène-acrylonitrile ou copolymère styrène-butadiène-styrène.

3. Composition thermoplastique selon la revendication 1 ou 2, caractérisée en ce que la résine thermoplastique est du type polystyrène.

4. Composition thermoplastique selon l'une des revendications 1 à 3, caractérisée en ce que la charge minérale pulvérulente est du carbonate de calcium naturel ou précipité, de l'hydroxyde d'aluminium, de l'oxyde de titane, du sulfate de calcium ou leurs mélanges.

5. Composition thermoplastique selon l'une des revendications 1 à 4, caractérisée en ce que le groupe polyaryle A de l'agent dispersant de formule générale (I) a un poids moléculaire compris entre 154 et 2 000.

6. Composition thermoplastique selon l'une des revendications 1 à 5, caractérisée en ce que le nombre entier x + y d'oxydes d'alkylène de l'agent dispersant de formule générale (I) est compris dans la gamme de 16 à 40 inclus.

7. Composition thermoplastique, selon l'une des revendications 1 à 6, caractérisée en ce qu'elle contient de 5 à 85% en poids de charge minérale pulvérulente, par rapport au poids total de la résine et de la charge et de 0,5 à 5% en poids d'agent dispersant de formule générale (I), par rapport au poids de la charge.

8. Agent dispersant pour la préparation de compositions thermoplastiques selon l'une des revendications 1 à 7, caractérisé en ce qu'il répond à la formule générale : 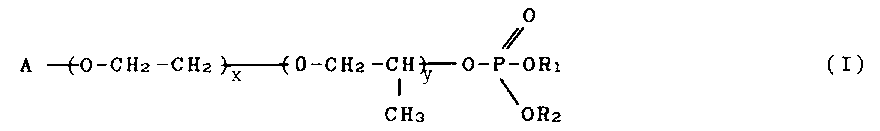 dans laquelle :
- A est un groupe polyaryle, ramifié ou non,
- x et y sont des entiers allant de 0 à 100 inclus, tels que x + y soit un nombre entier supérieur à 40 et ne dépassant pas 100, 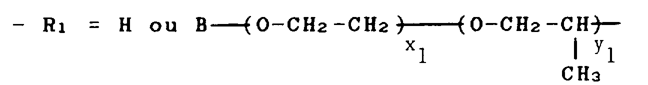 avec x₁ et y₁ étant des nombres entiers allant de 0 à 100 inclus, tels que x₁ + y₁ soit un nombre entier ne dépassant pas 100,
- B est un groupe polyaryle, ramifié ou non, ou un radical alkyle, aryle, arylalkyle, alkylaryle, alcanoyle ou amine, 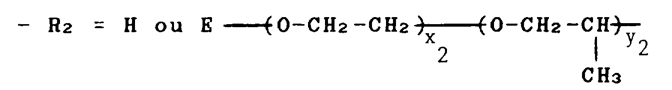 avec x₂ et y₂ étant des nombres entiers allant de 0 à 100 inclus, tels que x₂ + y₂ soit un nombre entier ne dépassant pas 100,
- E est un groupe polyaryle, ramifié ou non, ou un radical alkyle, aryle, arylalkyle, alkylaryle, alcanoyle ou amine, et dans laquelle R₁ et R₂ peuvent être identiques ou différents.

9. Application de la composition thermoplastique selon les revendications 1 à 7 à la fabrication de compounds et/ou d'objets plastiques.

## Patentansprüche

1. Mit Füllstoff beladene thermoplastische Zusammensetzung, dadurch gekennzeichnet, daß sie im wesentlichen umfaßt:
a) ein thermoplastisches Harz, das aus Polystyrol und dessen Derivaten ausgewählt ist,
b) einen pulverförmigen Mineralfüllstoff,
c) ein Dispergiermittel der Formel (I): 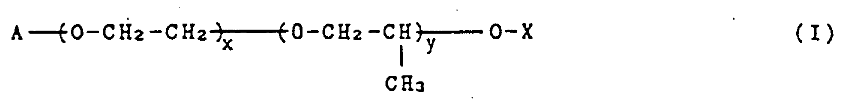 in der
- A eine verzweigte oder unverzweigte Polyarylgruppe ist,
- x und y ganze Zahlen von 0 bis 100 einschließlich sind, so daß x + y für eine ganze Zahl von 1 bis 100 einschließlich steht,
- X = H oder 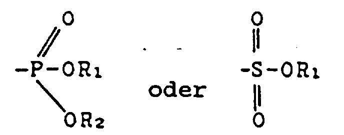 mit:
- R₁ = H oder 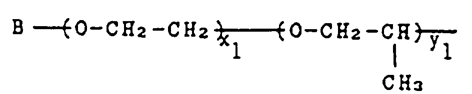 worin:
- B eine verzweigte oder unverzweigte Polyarylgruppe oder ein Alkyl-, Aryl-, Arylalkyl-, Alkylaryl-, Alkanoyl- oder Aminrest ist,
- x₁ und y₁ ganze Zahlen von 0 bis 100 einschließlich sind, so daß x₁ + y₁ für eine ganze Zahl von 1 bis 100 einschließlich steht,
- R₂ = H oder 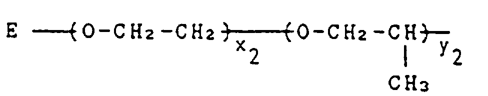 worin:
- E eine verzweigte oder unverzweigte Polyarylgruppe oder ein Alkyl-, Aryl-, Arylalkyl-, Alkylaryl-, Alkanoyl- oder Aminrest ist,
- x₂ und y₂ ganze Zahlen von 0 bis 100 einschließlich sind, so daß x₂ + y₂ für eine ganze Zahl von 1 bis 100 einschließlich steht,
- und worin R₁ und R₂ gleich oder verschieden sein können,
d) gegebenenfalls einen oder mehrere andere Zusatzstoffe bekannter Typen, vorzugsweise ausgewählt aus thermischen oder photochemischen Stabilisatoren, Antioxidanzien, Gleitmitteln, Weichmachern, antistatischen Mitteln, Feuerschutzmitteln, Glasfasern, Glaskugeln.

2. Thermoplastische Zusammensetzung nach Anspruch 1, dadurch gekennzeichnet, daß das thermoplastische Harz vom Polystyrol-, Styrol-Butadien-Copolymer-, Acrylnitril-Butadien-Styrol-Copolymer-, Styrol-Acrylnitril-Copolymeroder Styrol-Butadien-Styrol-Copolymer-Typ ist.

3. Thermoplastische Zusammensetzung nach Anspruch 1 oder 2, dadurch gekennzeichnet, daß das thermoplastische Harz vom Polystyrol-Typ ist.

4. Thermoplastische Zusammensetzung nach einem der Ansprüche 1 bis 3, dadurch gekennzeichnet, daß der pulverförmige Mineralfüllstoff ein natürliches oder gefälltes Calciumcarbonat, Aluminiumhydroxid, Titanoxid, Calciumsulfat oder deren Mischungen ist.

5. Thermoplastische Zusammensetzung nach einem der Ansprüche 1 bis 4, dadurch gekennzeichnet, daß die Polyarylgruppe A des Dispergiermittels der allgemeinen Formel (I) ein Molekulargewicht zwischen 154 und 2000 eingeschlossen aufweist.

6. Thermoplastische Zusammensetzung nach einem der Ansprüche 1 bis 5, dadurch gekennzeichnet, daß die ganze Zahl x + y der Alkylenoxide des Dispergiermittels der allgemeinen Formel (I) in dem Bereich von 16 bis 40 einschließlich liegt.

7. Thermoplastische Zusammensetzung nach einem der Ansprüche 1 bis 6, dadurch gekennzeichnet, daß sie 5 bis 85 Gew.-% pulverförmigen Mineralfüllstoff, bezogen auf das Gesamtgewicht des Harzes und des Füllstoffs, und 0,5 bis 5 Gew.-% Dispergiermittel der allgemeinen Formel (I), bezogen auf das Gewicht des Füllstoffs, enthält.

8. Dispergiermittel zur Herstellung von thermoplastischen Zusammensetzungen nach einem der Ansprüche 1 bis 7, dadurch gekennzeichnet, daß es der allgemeinen Formel: 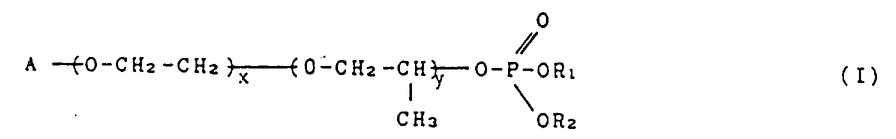 entspricht, in der:
- A eine verzweigte oder unverzweigte Polyarylgruppe ist,
- x und y ganze Zahlen von 0 bis 100 einschließlich sind, so daß x + y für eine ganze Zahl oberhalb von 40 und nicht über 100 steht,
- R₁ = H oder 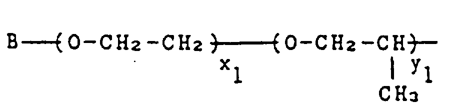 wobei x₁ und y₁ ganze Zahlen von 0 bis 100 einschließlich sind, so daß x₁ + y₁ für eine ganze Zahl steht, die 100 nicht überschreitet,
- B eine verzweigte oder unverzweigte Polyarylgruppe oder ein Alkyl-, Aryl-, Arylalkyl-, Alkylaryl-, Alkanoyl- oder Aminrest ist,
- R₂ = H oder 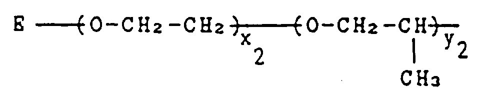 wobei x₂ und y₂ ganze Zahlen von 0 bis 100 einschließlich sind, so daß x₂ + y₂ für eine ganze Zahl steht, die 100 nicht überschreitet,
- E eine verzweigte oder unverzweigte Polyarylgruppe oder ein Alkyl-, Aryl-, Arylalkyl-, Alkylaryl-, Alkanoyl- oder Aminrest ist,
und in der R₁ und R₂ identisch oder verschieden sein können.

9. Verwendung der thermoplastischen Zusammensetzung nach den Ansprüchen 1 bis 7 bei der Herstellung von Vergußmassen und/oder Kunststoffgegenständen.

## Claims

1. Thermoplastic compound with a filler, characterised in that it essentially comprises :
a) a thermoplastic resin selected from polystyrene and its derivatives,
b) a powdered mineral filler,
c) a dispersing agent having the formula (I) : 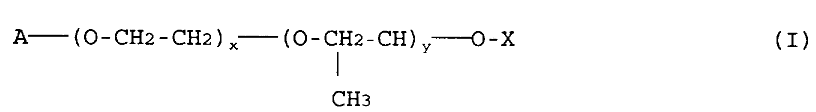 in which :
- A is a polyaryl group, branched or not,
- x and y are whole numbers from 0 to 100 inclusive, so that x+y represent a whole number from 1 to 100 inclusive,
- X = H or 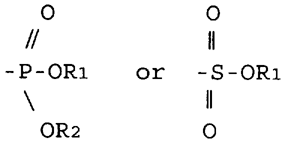 where : 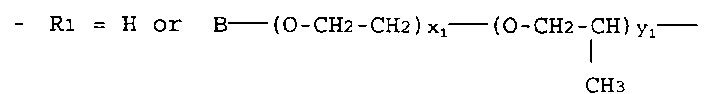 in which :
- B is a polyaryl group, branched or not, or a radical alkyl, aryl, arylalkyl, alkylaryl, alcanoyl or amine,
- x₁ and y₁ are whole numbers from 0 to 100 inclusive so that x₁+y₁ represent a whole number from 1 to 100 inclusive, 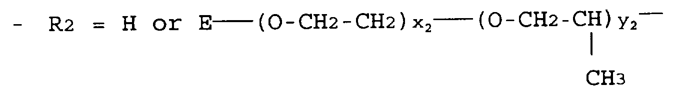 in which :
- E is a polyaryl group, branched or not, or a radical alkyl, aryl, arylalkyl, alkylaryl, alcanoyl or amine,
- x₂ and y₂ are whole numbers from 0 to 100 inclusive, so that x₂+y₂ represent a whole number from 1 to 100 inclusive,
- and where R₁ and R₂ can be the same or different,
d) one or several other additives of known types are possibly used, preferably selected from the thermal or photochemical stabilisers, anti-oxidants, lubricants, plasticizers, anti-statics, flame retardants, fibre glass, glass bearings.

2. Thermoplastic compound as claimed in claim 1, characterised in that the thermoplastic resin is of the polystyrene, styrene-butadiene copolymer, acrylonitrile-butadiene-styrene copolymer, styreneacrylonitrile copolymer or styrene-butadiene-styrene copolymer type.

3. Thermoplastic compound as claimed in claim 1 or 2, characterised in that the thermoplastic resin is of the polystyrene type.

4. Thermoplastic compound as claimed in one of claims 1 to 3, characterised in that the powdered mineral filler is natural or precipitated calcium carbonate, aluminium hydroxide, titanium oxide, calcium sulphate or mixtures thereof.

5. Thermoplastic compound as claimed in one of claims 1 to 4, characterised in that the polyaryl group A in the dispersing agent of general formula (I) has a molecular weight in the range between 154 and 2,000.

6. Thermoplastic compound as claimed in one of claims 1 to 5, characterised in that the whole number x + y of alkylene oxides in the dispersing agent of general formula (I) is within the range of 16 to 40 inclusive.

7. Thermoplastic compound as claimed in one of claims 1 to 6, characterised in that it contains from 5 to 85% by weight of powdered mineral filler relative to the total weight of the resin and the filler and from 0.5 to 5% by weight of the dispersing agent of general formula (I) relative to the weight of the filler.

8. Dispersing agent for the preparation of thermoplastic compounds as claimed in one of claims 1 to 7, characterised in that it corresponds to the general formula : 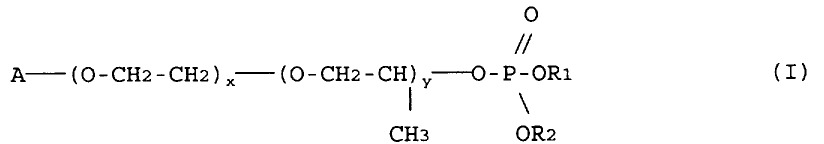 in which :
- A is a polyaryl group, branched or not,
- x and y are whole numbers from 0 to 100 inclusive, so that x+y is a whole number greater than 40 and not exceeding 100, 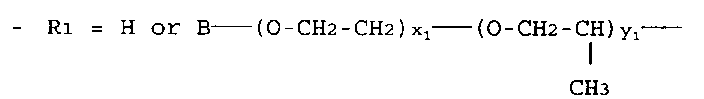 where x₁ and y₁ are whole numbers from 0 to 100 inclusive, so that x₁ + y₁ is a whole number not exceeding 100,
- B is a polyaryl group, branched or not, or a radical alkyl, aryl, arylalkyl, alkylaryl, alcanoyl or amine, 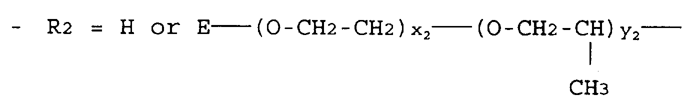 where x₂ and y₂ are whole numbers from 0 to 100 inclusive, so that x₂+y₂ is a whole number not exceeding 100,
- E is a polyaryl group, branched or not, or a radical alkyl, aryl, arylalkyl, alkylaryl, alcanoyl or amine, and in which R₁ and R₂ may be identical or different.

9. Application of the thermoplastic compound as claimed in claims 1 to 7 to the manufacture of plastics compounds and/or objects.
